# EUROPÄISCHE PATENTSCHRIFT

(11) **EP 2 511 147 B1**
(45) Veröffentlichungstag und Bekanntmachung des Hinweises auf die Patenterteilung: **23.08.2017**
(21) Anmeldenummer: 12163690.6
(22) Anmeldetag: 11.04.2012
(51) Int. Cl.: B60W 10/06, B60W 10/113, B60W 20/00, B60W 30/192, B60W 30/18, B60W 10/02, B60W 10/08, B60K 6/48, F16H 3/00

(54) **Verfahren zum Betreiben eines Hybrid-Antriebsstranges**
Method for operating a hybrid drive train
Procédé destiné au fonctionnement d'une chaîne cinématique hybride

(30) Priorität: 12.04.2011 DE 102011018203
(43) Veröffentlichungstag der Anmeldung: 17.10.2012
(73) Patentinhaber: GETRAG B.V. & Co. KG, 74199 Untergruppenbach (DE)
(72) Erfinder: Blessing, Uli Christian, 74078 Heilbronn (DE); Kinder, Patrick, 71665 Vaihingen / Enz (DE); Matusche, Ingo, 74199 Untergruppenbach (DE); Hoffmeister, Thomas, 70825 Korntal-Münchingen (DE); Stepper, Thorsten, 74638 Waldenburg (DE)
(74) Vertreter: Witte, Weller & Partner Patentanwälte mbB

(56) Entgegenhaltungen:
- EP-A1- 2 292 489
- DE-A1-102007 022 774
- DE-A1-102007 055 826
- DE-A1-102007 055 831
- DE-A1-102008 040 692

## Beschreibung

Die vorliegende Erfindung betrifft ein Verfahren zum Betreiben eines Hybrid-Antriebsstranges für ein Kraftfahrzeug, der einen Verbrennungsmotor und eine an diesen angekoppelte Getriebeanordnung mit zumindest einem Leistungsübertragungspfad aufweist, der eine Reibkupplung und eine Getriebeeinheit aufweist, wobei eine elektrische Maschine an den Leistungsübertragungspfad angekoppelt ist, und zwar in Leistungsflussrichtung hinter der Reibkupplung.

Ferner betrifft die vorliegende Erfindung eine Steuereinrichtung zum Betreiben eines derartigen Hybrid-Antriebsstranges.

Ein Antriebsstrang der beschriebenen Art ist aufgrund der Ankopplung der elektrischen Maschine in Leistungsflussrichtung hinter der Reibkupplung dazu in der Lage, einen rein elektrischen Fahrbetrieb durchzuführen, bei dem die Reibkupplung geöffnet ist, so dass der Verbrennungsmotor nicht mitgeschleppt wird. Ferner ist ein rein verbrennungsmotorischer Antrieb möglich, bei dem die elektrische Maschine entweder vom Leistungsübertragungspfad abgekoppelt ist oder im Leerlauf ist (oder im Generatorbetrieb).

Schließlich ist auch ein Hybrid-Fahrbetrieb möglich, bei dem Antriebsleistung sowohl von dem Verbrennungsmotor als auch von der elektrischen Maschine zum Vortrieb des Kraftfahrzeuges verwendet wird.

In der Regel weisen derartige Antriebsstränge zusätzlich zu der an den Leistungsübertragungspfad angekoppelten elektrischen Maschine einen Anlasser auf, der dazu verwendet wird, um den Verbrennungsmotor zu starten. Ferner ist aus dem Dokument DE 10 2007 050 659 A1 ein Antriebsstrang der oben beschriebenen Art bekannt, wobei der Verbrennungsmotor während eines elektrischen Fahrbetriebes gestartet werden kann. Dies erfolgt dadurch, dass die elektrische Maschine über einen ersten Leistungsübertragungspfad Leistung auf einen Abtrieb überträgt, und ein Teil der Antriebsleistung über einen parallelen zweiten Leistungsübertragungspfad auf den Verbrennungsmotor rückgekoppelt wird. Dieses Verfahren ist nicht immer durchführbar.

Aus dem Dokument DE 10 2007 055 831 A1 ist ein Verfahren und eine Vorrichtung zum Betrieb eines Hybridantriebes eines Fahrzeuges bekannt, wobei das Fahrzeug einen Antriebsstrang aufweist, der im Wesentlichen einen Verbrennungsmotor, wenigstens eine ansteuerbare Kupplung, wenigstens eine elektrische Maschine und ein automatisiertes Schaltgetriebe umfasst, wobei der Verbrennungsmotor über wenigstens eine Kupplung mit der elektrischen Maschine kraftschlüssig verbindbar und mittels der elektrischen Maschine startbar ist, wobei ein Start des Verbrennungsmotors mit einem Gangwechsel des Schaltgetriebes koordinierbar ist. Dabei wird nach Erfassen einer Startanforderung mit zeitgleicher Schaltanforderung die Kupplung derart angesteuert, dass Drehmoment am Getriebeeingang abgesenkt und ein Schleppmoment auf den Verbrennungsmotor ausgeübt wird. Dadurch kann der Verbrennungsmotor bereits vor Erreichen einer Schaltpause gestartet werden.

Zum Starten eines Verbrennungsmotors ist es generell notwendig, diesen auf eine Drehzahl oberhalb einer sogenannten Zünddrehzahl zu bringen. Unterhalb dieser Drehzahl ist ein Starten des Verbrennungsmotors generell nicht möglich. Daher ist zum Starten des Verbrennungsmotors bei derartigen Antriebssträngen generell ein zusätzlicher Anlasser vorgesehen, sofern der Verbrennungsmotor nicht selbst startfähig ist.

Vor diesem Hintergrund ist es eine Aufgabe der Erfindung, ein verbessertes Verfahren zum Betreiben eines Hybrid-Antriebsstranges für ein Kraftfahrzeug sowie eine zugeordnete Steuereinrichtung anzugeben, bei dem ein separater Anlasser nicht notwendig ist.

Diese Aufgabe wird bei dem eingangs genannten Verfahren dadurch gelöst, dass zum Starten des Verbrennungsmotors während des Stillstands oder einer Kriechfahrt des Kraftfahrzeugs, bei der eine Geschwindigkeit des Kraftfahrzeugs so niedrig ist, dass selbst bei der niedrigst möglichen Gangstufe der Getriebeeinheit der Verbrennungsmotor nicht auf ein Zünddrehzahl beschleunigt werden kann, mit eingelegter Gangstufe in der Getriebeeinheit folgende Schritte durchgeführt werden, nämlich Auslegen der Gangstufe und Schließen der Reibkupplung sowie Beschleunigen des Verbrennungsmotors auf die Zünddrehzahl und Starten des Verbrennungsmotors, wobei in einem Vorbereitungsschritt vor dem Auslegen der Gangstufe die Reibkupplung eingestellt wird, um den Verbrennungsmotor auf eine Drehzahl unterhalb der Zünddrehzahl zu beschleunigen.

Unter einer Kriechfahrt des Kraftfahrzeuges soll vorliegend eine Fahrt des Kraftfahrzeuges mit einer Geschwindigkeit verstanden werden, die so niedrig ist, dass selbst bei der niedrigst möglichen Gangstufe der Getriebeeinheit der Verbrennungsmotor nicht auf die Zünddrehzahl beschleunigt werden kann.

Die vorliegende Erfindung geht somit vorzugsweise davon aus, dass das Kraftfahrzeug rein elektrisch angetrieben wird und sich entweder mit Kriechgeschwindigkeit bewegt oder gerade stillsteht. In solchen Situationen kann es vorkommen, dass der Verbrennungsmotor zugeschaltet werden soll (oder muss). Wenn beispielsweise während einer länger andauernden elektrischen Kriechfahrt der Ladezustand der Batterie zu niedrig wird, ist ein Zuschalten des Verbrennungsmotors notwendig.

Die vorliegende Erfindung schlägt nun vor, während dieser Kriechfahrt die Gangstufe auszulegen und die Reibkupplung zu schließen (die bei elektrischem Fahrbetrieb generell geöffnet ist), und anschließend den Verbrennungsmotor mittels der elektrischen Maschine auf die Zünddrehzahl zu beschleunigen und den Verbrennungsmotor zu starten.

Anschließend kann der weitere Fahrbetrieb entweder rein verbrennungsmotorisch eingerichtet werden, oder als Hybrid-Fahrbetrieb.

Bei dem erfindungsgemäßen Verfahren ist es nicht notwendig, in dem Antriebsstrang einen separaten Anlasser vorzusehen.

Demzufolge kann der Antriebsstrang ein geringes Gewicht aufweisen.

Der Hybrid-Antriebsstrang kann dabei eine automatisierte Getriebeeinheit aufweisen sowie eine automatisiert angesteuerte Reibkupplung. Beispielsweise kann der Antriebsstrang als automatisiertes Schaltgetriebe (ASG/AMT) ausgebildet sein oder als Doppelkupplungsgetriebe.

Während das erfindungsgemäße Verfahren bei Anwendung auf ein automatisiertes Schaltgetriebe generell einen Zugkrafteinbruch mit sich bringt, ist es bei dem erfindungsgemäßen Verfahren, das auf einen Hybrid-Antriebsstrang mit einem Doppelkupplungsgetriebe angewendet wird, möglich, diesen Startvorgang während des Stillstands oder während einer Kriechfahrt des Kraftfahrzeuges ohne oder nur mit geringem Zugkrafteinbruch durchzuführen.

Die Aufgabe wird somit vollkommen gelöst.

Gemäß einer erfindungsgemäßen Ausführungsform wird in einem Vorbereitungsschritt vor dem Auslegen der Gangstufe die Reibkupplung dazu eingestellt, um den Verbrennungsmotor auf eine Drehzahl unterhalb der Zünddrehzahl zu beschleunigen.

Hierdurch wird der Verbrennungsmotor während einer Kriechfahrt angeschleppt, wobei die Geschwindigkeit bei der Kriechfahrt jedoch so gering ist, dass nur eine Drehzahl des Verbrennungsmotors unterhalb der Zünddrehzahl erreicht werden kann.

Dieser Schritt kann jedoch eine Vorbereitung für den eigentlichen Startvorgang des Verbrennungsmotors darstellen, da der Verbrennungsmotor dann ausgehend von der niedrigen Drehzahl in deutlich kürzerer Zeit mittels der elektrischen Maschine auf die Zünddrehzahl hoch beschleunigt werden kann. Demzufolge kann der Startvorgang insgesamt verkürzt und die Zeit einer Zugkraftunterbrechung verringert werden.

Dabei ist es von besonderem Vorzug, wenn die elektrische Maschine in dem Vorbereitungsschritt dazu angesteuert wird, dass Schleppmoment des Verbrennungsmotors zu kompensieren.

Hierdurch kann der Vorbereitungsschritt durchgeführt werden, ohne dass sich die von dem Fahrer des Kraftfahrzeuges vorgegebene Geschwindigkeit ändert.

Ferner ist es bei dieser Ausführungsform vorteilhaft, wenn die Reibkupplung in dem Vorbereitungsschritt derart eingestellt wird, dass sie ein Moment entsprechend einem Losbrechmoment des Verbrennungsmotors übertragen kann.

Aufgrund der Kompression in den Zylindern des Verbrennungsmotors ist zum Anschleppen des Verbrennungsmotors zunächst ein sogenanntes Losbrechmoment zu überwinden. Wenn die Reibkupplung in dem Vorbereitungsschritt zumindest zur Übertragung dieses Losbrechmomentes auslegt ist, kann der Verbrennungsmotor in dem Vorbereitungsschritt erfolgreich angeschleppt werden.

In diesem Zusammenhang ist anzumerken, dass die Reibkupplung vorzugsweise von einer solchen Art ist, dass sie nicht nur geschlossen oder geöffnet werden kann, sondern auch in einem Schlupfbetrieb betrieben werden kann. Hierdurch ist es möglich, die Reibkupplung auf ein bestimmtes Drehmoment einzustellen.

Sofern im vorliegenden Zusammenhang von einem Schließen einer Reibkupplung gesprochen wird, so soll dies bedeuten, dass die Reibkupplung auf ein Moment eingestellt wird, das so groß ist, dass die jeweils geforderte Leistungsübertragung (Momentenübertragung über die Reibkupplung) möglich ist, ohne dass an der Reibkupplung zusätzlicher Schlupf entsteht.

Die oben beschriebenen Verfahren sind beispielsweise in einem Hybrid-Antriebsstrang durchführbar, der ein automatisiertes Schaltgetriebe mit einer einzelnen Reibkupplung zwischen Getriebeeinheit und Verbrennungsmotor aufweist.

Besonders bevorzugt wird die vorliegende Erfindung jedoch im Rahmen eines Antriebsstranges mit einem Doppelkupplungsgetriebe verwendet. Es ist daher bevorzugt, wenn die Getriebeanordnung ein Doppelkupplungsgetriebe mit einem ersten und einem zweiten Leistungsübertragungspfad aufweist, wobei der erste Leistungsübertragungspfad eine erste Reibkupplung und eine erste Getriebeeinheit aufweist, wobei der zweite Leistungsübertragungspfad eine zweite Reibkupplung und eine zweite Getriebeeinheit aufweist und wobei die elektrische Maschine in Leistungsflussrichtung hinter der zweiten Reibkupplung an den zweiten Leistungsübertragungspfad angekoppelt ist.

Besonders bevorzugt ist die elektrische Maschine dabei in Leistungsflussrichtung vor den Schaltkupplungen der zweiten Getriebeeinheit angekoppelt, also bspw. mit einer Getriebeeingangswelle der zweiten Getriebeeinheit verbunden.

Die zweite Getriebeeinheit umfasst vorzugsweise die geraden Gangstufen, die erste Getriebeeinheit vorzugsweise die ungeraden Gangstufen.

Die elektrische Maschine ist dabei vorzugsweise fest an den zweiten Leistungsübertragungspfad angekoppelt, könnte jedoch auch über eine Kupplung von diesem trennbar sein. Generell ist es ferner bevorzugt, wenn an den ersten Leistungsübertragungspfad keine weitere elektrische Maschine angekoppelt ist, obgleich es denkbar ist, die elektrische Maschine, die an dem zweiten Leistungsübertragungspfad angekoppelt ist, alternativ auch an den ersten Leistungsübertragungspfad anzukoppeln.

Bei dem Verfahren zum Betreiben eines Hybrid-Antriebsstranges mit Doppelkupplungsgetriebe ist es bevorzugt, wenn der Schritt des Auslegens der in der zweiten Getriebeeinheit eingelegten Gangstufe und des Schließens der zweiten Reibkupplung die Schritte beinhaltet, zunächst die zweite Reibkupplung zu schließen und anschließend die in der zweiten Getriebeeinheit eingelegte Gangstufe auszulegen.

Hierdurch kann die Zeit eines Zugkrafteinbruchs zum Starten des Verbrennungsmotors verkürzt werden. Ferner ist dieser Ansatz generell Voraussetzung, um bei bevorzugten Varianten das Starten des Verbrennungsmotors mittels der elektrischen Maschine im Wesentlichen ohne Zugkraftunterbrechung durchzuführen.

Dabei ist es von besonderem Vorzug, wenn die in der zweiten Getriebeeinheit eingelegte Gangstufe vor dem Schließen der zweiten Reibkupplung in Auslegerichtung vorgespannt wird.

Bei dieser Ausführungsform wird davon ausgegangen, dass eine Schaltkupplung zum Ein- und Auslegen der Gangstufe so ausgebildet ist, dass bei eingelegter Gangstufe ein unbeabsichtigtes Auslegen verhindert wird, indem an Verzahnungen der Schaltkupplung geeignete Hinterlegungen vorgesehen sind.

Durch das Vorspannen der Gangstufe in Auslegerichtung wird erreicht, dass sich die Gangstufe quasi von selber auslegen kann, sobald sie im Wesentlichen lastfrei wird.

Auch hierdurch kann die Zeit für die Durchführung des erfindungsgemäßen Verfahrens deutlich verkürzt werden.

Gemäß einer weiteren bevorzugten Ausführungsform wird vor dem Auslegen der Gangstufe die erste Reibkupplung auf ein gewünschtes Antriebsmoment eingestellt.

Durch diese Maßnahme kann eine Überblendung von Antriebsmoment von der elektrischen Maschine von dem ersten Leistungsübertragungspfad auf den zweiten Leistungsübertragungspfad stattfinden, so dass während des Startens des Verbrennungsmotors Leistung parallel über den ersten Leistungsübertragungspfad auf einen Abtrieb des Kraftfahrzeuges übertragen werden kann. Hierbei versteht sich, dass in der ersten Getriebeeinheit vorzugsweise eine geeignete Gangstufe eingelegt ist, die vorzugsweise benachbart ist zu der in der zweiten Getriebeeinheit eingelegten Gangstufe bspw. höher ist als die in der zweiten Getriebeeinheit eingelegte Gangstufe.

Hierbei ist es von besonderem Vorzug, wenn mit oder nach dem Schließen der zweiten Reibkupplung und dem Einstellen der ersten Reibkupplung auf ein gewünschtes Antriebsmoment das von der elektrischen Maschine abgegebene Moment angepasst wird, bis die in der zweiten Getriebeeinheit eingelegte Gangstufe herausspringt und/oder im Wesentlichen lastfrei ausgelegt werden kann.

Bei dieser Ausführungsform kann durch geeignete Ansteuerung der elektrischen Maschine bei geschlossener zweiter Reibkupplung und auf ein Antriebsmoment eingestellter erster Reibkupplung die in der zweiten Getriebeeinheit eingelegte Gangstufe ausgelegt werden (entweder durch Herausspringen aufgrund der Vorspannung in Auslegerichtung oder durch geeignete Ansteuerung eines Schaltkupplungsaktuators), bevor der eigentliche Schritt des Beschleunigens des Verbrennungsmotors zu dessen Starten erfolgt. Dabei kann es erforderlich sein, das von der elektrischen Maschine abgegebene Moment kurzzeitig abzusenken, um ein im Wesentlichen lastfreies Auslegen der in der zweiten Getriebeeinheit eingelegten Gangstufe zu erzielen.

Ferner ist es insgesamt von Vorteil, wenn nach dem Starten des Verbrennungsmotors das von der elektrischen Maschine abgegebene Moment verringert wird und das von dem Verbrennungsmotor abgegebene Moment erhöht wird, um von dem Verbrennungsmotor abgegebene Leistung über den ersten Leistungsübertragungspfad zu übertragen.

Das Verringern des einen Momentes und das Erhöhen des anderen Momentes können dabei vorzugsweise überschneidend stattfinden, um einen Zugkrafteinbruch zu vermeiden.

Generell ist es ferner bevorzugt, wenn nach dem Starten des Verbrennungsmotors die zweite Reibkupplung geöffnet wird, wobei dies vorzugsweise im Wesentlichen parallel zu einer Verringerung des von der elektrischen Maschine abgegebenen Momentes erfolgt.

Bei einer weiteren bevorzugten Ausführungsform, die generell auch bei einem Verfahren zur Steuerung eines Hybrid-Antriebsstranges mit einem automatisierten Schaltgetriebe angewendet werden kann, wird die Gangstufe in dem Vorbereitungsschritt in Auslegerichtung vorgespannt und das von der elektrischen Maschine bereitgestellte Moment wird nach dem Vorbereitungsschritt angepasst, bis die Gangstufe herausspringt.

Hierdurch ist es generell möglich, die Zeit zur Durchführung des Startens des Verbrennungsmotors und damit vorzugsweise die Zeit eines Zugkrafteinbruches zu verkürzen. Das Herausspringen erfolgt, sobald im Wesentlichen eine Lastfreiheit an der Gangstufe (Synchronisierung) vorliegt.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Darstellung eines Hybrid-Antriebsstranges;
- Fig. 2: ein Flussdiagramm eines Verfahrens gemäß einer Ausführungsform der vorliegenden Erfindung;
- Fig. 3: ein Zeitablaufdiagramm des Verfahrens der Fig. 2;
- Fig. 4: ein Flussdiagramm einer weiteren Ausführungsform eines erfindungsgemäßen Verfahrens;
- Fig. 5: ein Zeitablaufdiagramm des Verfahrens der Fig. 4;
- Fig. 6: ein Flussdiagramm einer weiteren Ausführungsform eines erfindungsgemäßen Verfahrens;
- Fig. 7: ein Zeitablaufdiagramm des Verfahrens der Fig. 6; und
- Fig. 8: ein alternatives Zeitablaufdiagramm des Verfahrens der Fig. 6.

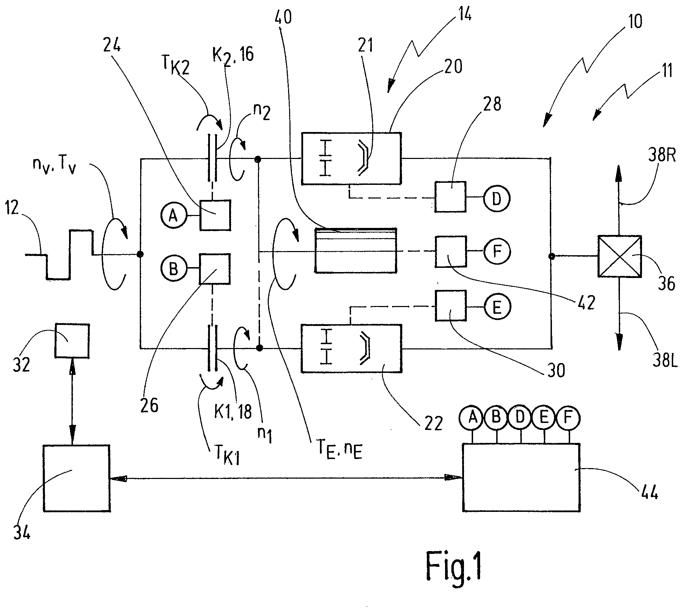

Fig. 1 zeigt in schematischer Form einen Antriebsstrang 10 eines Kraftfahrzeuges 11, wobei der Antriebsstrang 10 einen Verbrennungsmotor 12 und ein Doppelkupplungsgetriebe 14 aufweist.

Das Doppelkupplungsgetriebe 14 beinhaltet eine Doppelkupplungsanordnung mit einer ersten Reibkupplung 18 (K1) und einer zweiten Reibkupplung 16 (K2). Die Reibkupplungen 16, 18 sind schlupfend betreibbar und können dazu angesteuert werden, ein jeweiliges Drehmoment T_{K1} bzw. T_{K2} zu übertragen.

Ferner weist das Doppelkupplungsgetriebe 14 ein erstes Teilgetriebe 22 und ein zweites Teilgetriebe 20 auf. Die erste Reibkupplung 18 und das erste Teilgetriebe 22 bilden einen ersten Leistungsübertragungspfad, die zweite Reibkupplung 16 und das zweite Teilgetriebe 20 bilden einen zweiten Leistungsübertragungspfad des Doppelkupplungsgetriebes 14.

Das Doppelkupplungsgetriebe 10 weist eine Mehrzahl von Gangstufen auf, wobei die ungeraden Gangstufen dem ersten Teilgetriebe (erste Getriebeeinheit) 22 und die geraden Gangstufen dem zweiten Teilgetriebe (zweite Getriebeeinheit) 20 zugeordnet sind (oder umgekehrt). Das Doppelkupplungsgetriebe 14 kann bspw. fünf, sechs, sieben oder mehr Gangstufen besitzen. Die Gangstufen des ersten Teilgetriebes 20 werden mittels jeweiliger Schaltkupplungen ein- und ausgelegt, die in Fig. 1 schematisch bei 21 dargestellt sind. In entsprechender Weise werden die Gangstufen des zweiten Teilgetriebes 22 mittels jeweiliger Schaltkupplungen ein- und ausgelegt.

Die Schaltkupplungen sind vorzugsweise als Synchron-Schaltkupplungen ausgebildet.

Zur Betätigung der ersten Reibkupplung 18 ist ein erster Kupplungsaktuator 26 vorgesehen. In entsprechender Weise dient ein zweiter Kupplungsaktuator 24 zur Betätigung der zweiten Reibkupplung 16. Die Kupplungsaktuatoren 24, 26 können hydraulisch oder elektromechanisch ausgebildet sein.

Zur Betätigung der Schaltkupplungen 21 des ersten Teilgetriebes 22 ist ein erster Getriebeaktuator 30 vorgesehen. Zur Betätigung der Schaltkupplungen des zweiten Teilgetriebes 20 ist ein zweiter Getriebeaktuator 28 vorgesehen. Anstelle von zwei getrennten Getriebeaktuatoren kann auch eine kombinierte Aktuatorik zur Betätigung der Gangstufen beider Teilgetriebe 20, 22 vorgesehen sein. Die Getriebeaktuatoren können dabei hydraulisch oder elektromechanisch ausgebildet sein.

Ferner ist zur Betätigung des Antriebsmotors 12 ein Motoraktuator 32 vorgesehen, beispielsweise in Form eines elektronischen Gaspedals. Der Motoraktuator 32 ist mit einem Motorsteuergerät 34 verbunden.

Der Antriebsstrang 10 weist ferner ein Differenzial 36 auf, das mit dem Ausgang des Doppelkupplungsgetriebes 14 verbunden ist und die Antriebsleistung auf eine rechte und linke Antriebswelle 38L, 38R verteilt.

Der Verbrennungsmotor 12 liefert ein Antriebsmoment Tv und dreht mit einer Drehzahl nᵥ (die in der Regel messbar ist).

Das dargestellte Layout des Doppelkupplungsgetriebes 14 sowie die dargestellte Sensorik und Aktorik sind lediglich beispielhaft als Grundlage für die Beschreibung der Erfindung zu verstehen. Die nachfolgend erläuterte Erfindung lässt sich dabei sowohl auf Antriebsstränge für den Längs- oder Quereinbau anwenden.

Die von dem Antriebsmotor 12 erzeugte Antriebsleistung wird alternativ entweder über die erste Reibkupplung 18 und das erste Teilgetriebe 22 auf die Getriebeausgangswelle oder über die zweite Reibkupplung 16 und das zweite Teilgetriebe 20 auf die Getriebeausgangswelle übertragen. Bei Übertragung von Antriebsleistung über eines der Teilgetriebe (beispielsweise über eine Gangstufe im Teilgetriebe 22) ist die Reibkupplung 16 des anderen Zweigs geöffnet, so dass eine benachbarte Gangstufe in dem parallelen (freien) Teilgetriebe 20 bereits eingelegt werden kann. Im Zugbetrieb wird beispielsweise die nächst höhere Gangstufe eingelegt, im Schubbetrieb beispielsweise die nächst niedrigere Gangstufe. Ein Gangwechsel erfolgt dann, indem die zwei Reibkupplungen 16, 18 derart überschneidend betätigt werden, so dass der Gangwechsel unter Last erfolgen kann.

Der Antriebsstrang des Kraftfahrzeuges ist in der in Fig. 1 dargestellten Ausführungsform als Hybrid-Antriebsstrang ausgebildet. Hierbei ist dem zweiten Teilgetriebe 20 eine elektrische Maschine 40 zugeordnet. Genauer gesagt ist die elektrische Maschine 40 fest mit einer Eingangswelle des zweiten Teilgetriebes verbunden, bspw. über einen Stirnradsatz. Mit anderen Worten weist eine nicht näher bezeichnete Rotorwelle der elektrischen Maschine 40 eine Drehzahl auf, die proportional ist zu der Drehzahl n₂ der Getriebeeingangswelle des zweiten Teilgetriebes 20.

Die elektrische Maschine 40 wird aus einem nicht näher dargestellten Energiespeicher (bspw. einer Batterie) gespeist und von einem Maschinenaktuator 42 angesteuert. Zu diesem Zweck kann eine entsprechende Leistungselektronik entweder in dem Maschinenaktuator 42 oder zugeordnet zu der elektrischen Maschine 40 vorgesehen sein.

Die elektrische Maschine 40 ist in dem dargestellten Ausführungsbeispiel dem Teilgetriebe 20 mit den geraden Gangstufen zugeordnet. Demzufolge lässt sich bspw. ein Anfahren des Kraftfahrzeuges rein elektrisch über die Gangstufe zwei durchführen. Ferner kann bspw. bei einem Fahrbetrieb über das erste Teilgetriebe 20 eine Rekuperation erfolgen, indem eine der Schaltkupplungen des zweiten Teilgetriebes 20 geschlossen wird und die zweite Reibkupplung 16 geöffnet bleibt.

Das Doppelkupplungsgetriebe kann mit nur einer derartigen elektrischen Maschine 40 in einem der Teilgetriebe 20, 22 ausgestattet sein. Alternativ ist es möglich, beiden Teilgetrieben 20, 22 eine elektrische Maschine zuzuordnen. Gemäß einer weiteren alternativen Ausführungsform ist es möglich, die einzelne elektrische Maschine 40 über eine geeignete Koppeleinrichtung alternativ mit der Getriebeeingangswelle des zweiten Teilgetriebes 20 oder mit der Getriebeeingangswelle des ersten Teilgetriebes 22 zu verbinden.

In allen Fällen ist es auch denkbar, eine Koppeleinrichtung vorzusehen, mittels der die elektrische Maschine(en) 40 von dem Teilgetriebe 20 (bzw. 22) abkoppelbar ist.

Bei 44 ist ein Getriebesteuergerät gezeigt, das mit den Kupplungsaktuatoren 24, 26 sowie den Getriebeaktuatoren 28, 30 und mit dem Maschinenaktuator 42 verbunden ist. Ferner steht das Getriebesteuergerät 44 mit dem Motorsteuergerät 34 in Kommunikationsverbindung.

Die elektrische Maschine 40 gibt ein Drehmoment T_{E} ab und dreht mit einer Drehzahl n_{E}. Die elektrische Maschine 40 wird in erster Linie zum Bereitstellen von zusätzlicher Antriebsleistung verwendet. Generell ist auch ein rein elektrisches Fahren möglich. Schließlich kann in bestimmten Fahrsituationen eine Rekuperation erfolgen.

Bei dem Antriebsstrang 10 der Fig. 1 kann es bei einem rein elektrischen Fahrbetrieb notwendig sein, den Verbrennungsmotor 12 zuzuschalten. Sofern die Fahrgeschwindigkeit des Kraftfahrzeuges 11 hinreichend groß ist und in dem zweiten Teilgetriebe 20 eine hinreichend niedrige Gangstufe eingelegt ist, kann durch Schließen der ersten oder der zweiten Reibkupplung 18, 16 der Verbrennungsmotor 12 auf eine Drehzahl oberhalb einer Zünddrehzahl beschleunigt werden. Anschließend kann der Verbrennungsmotor gestartet werden, und es kann beispielsweise Antriebsleistung von dem Verbrennungsmotor 12 über den ersten Leistungsübertragungspfad auf den Abtrieb (Differenzial 36) übertragen werden.

Sofern im elektrischen Fahrbetrieb jedoch eine sogenannte Kriechfahrt durchgeführt wird, steht diese Option des Startens des Verbrennungsmotors 12 nicht zur Verfügung. Denn bei einer solchen Kriechfahrt ist die am Eingang der Teilgetriebe 22, 20 anstehende Drehzahl (auch bei der niedrigsten Gangstufe) so gering, dass selbst bei vollständigem Schließen der ersten oder zweiten Reibkupplung der Verbrennungsmotor 12 nicht auf die Zünddrehzahl hoch beschleunigt werden kann.

Im Folgenden werden verschiedene Ausführungsformen beschrieben, bei denen während einer solchen Kriechfahrt oder sogar einem Stillstand des Fahrzeugs 11 das Starten des Verbrennungsmotors 12 mittels der elektrischen Maschine 40 durchgeführt werden kann, so dass ein separater Anlasser für den Verbrennungsmotor 12 bei dem Antriebsstrang 10 nicht vorgesehen werden muss.

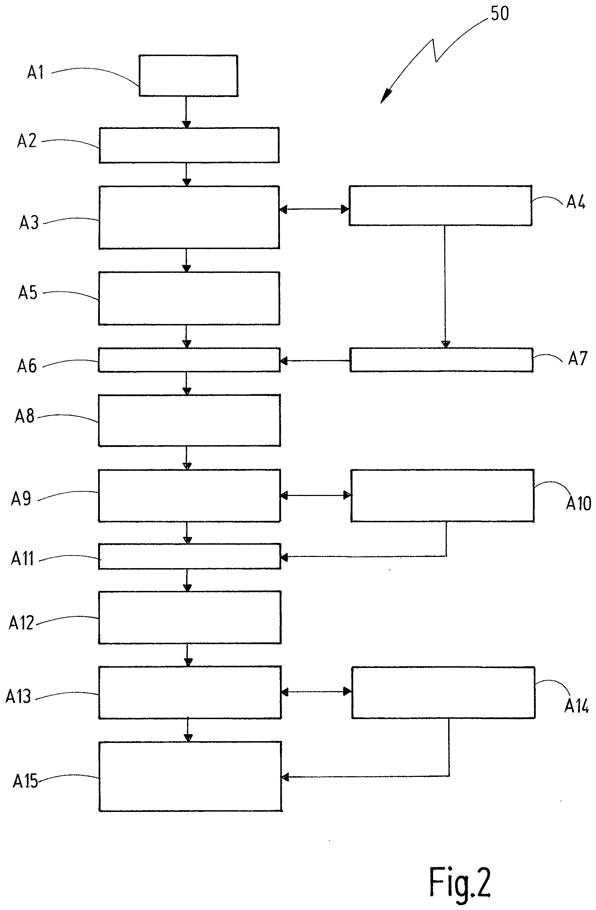

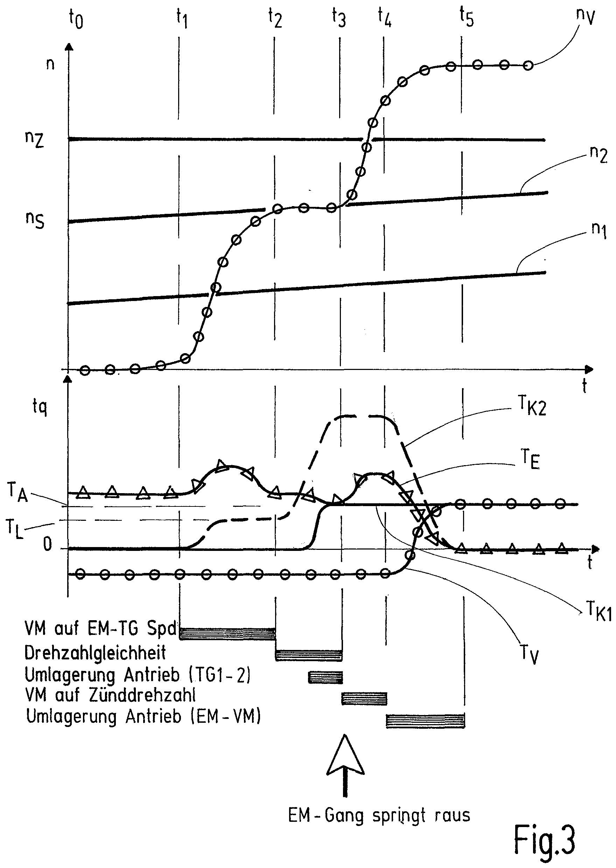

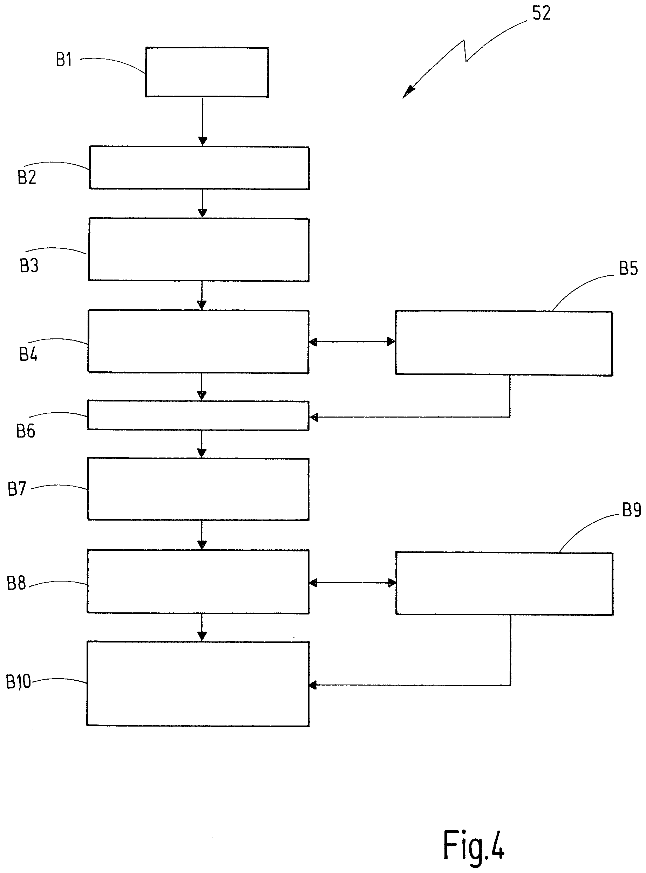

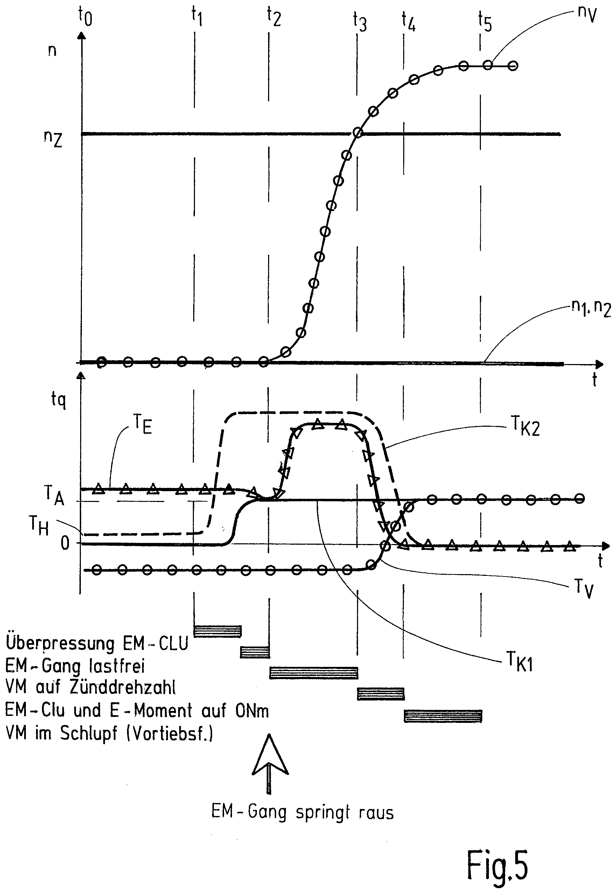

Dabei ist in den Fig. 2 und 3 eine Ausführungsform eines Verfahrens zum Betreiben des Antriebsstranges 10 dargestellt, bei dem während einer Kriechfahrt das Starten des Verbrennungsmotors 12 im Wesentlichen ohne Zugkrafteinbruch durchgeführt werden kann. Ein vergleichbares Verfahren zum Starten des Verbrennungsmotors bei Stillstand des Kraftfahrzeuges ist in Fig. 4 und 5 dargestellt. Bei diesem Verfahren kann das Fahrzeug beispielsweise an einer Steigung zudem im Stillstand gehalten werden, ohne dass das Einlegen einer Parkbremse oder dergleichen erforderlich ist.

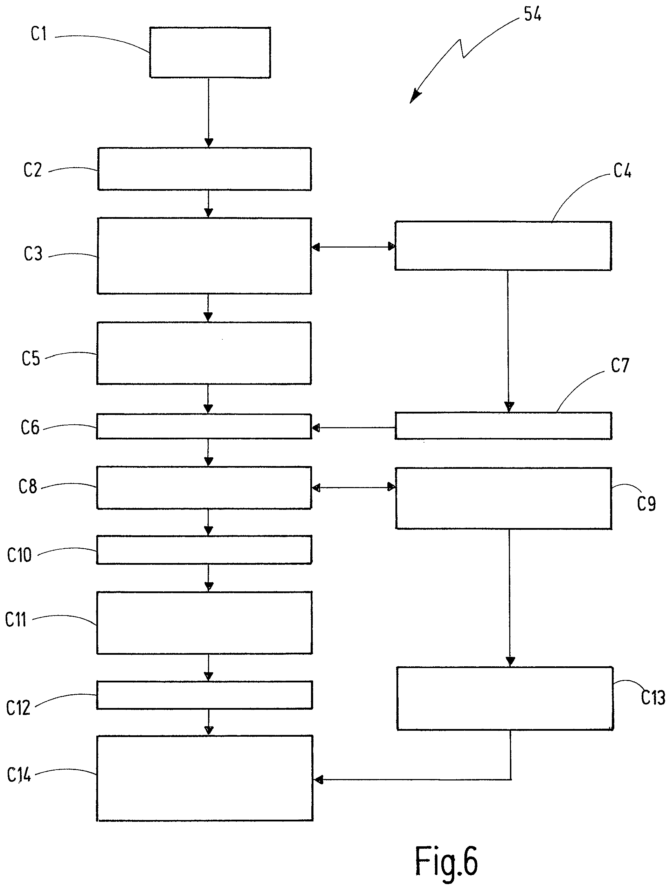

In den Fig. 6 bis 8 ist eine weitere Ausführungsform gezeigt, bei der das Starten des Verbrennungsmotors 12 während einer Kriechfahrt durchgeführt werden kann, wobei bei dieser Ausführungsform eine kurze Zugkraftunterbrechung erfolgt.

Das Verfahren der Fig. 2 und 3 geht von einem Zustand aus, bei dem das Fahrzeug 11 mit einer Kriechgeschwindigkeit rein elektrisch durch die elektrische Maschine 40 angetrieben fährt. In dem zweiten Teilgetriebe 20 ist daher eine Gangstufe eingelegt, und die Getriebeeingangswelle dreht mit einer Drehzahl n₂.

Die erste Reibkupplung 18 ist geöffnet und in dem ersten Teilgetriebe 22 ist eine Gangstufe vorgewählt, so dass die Getriebeeingangswelle des ersten Teilgetriebes 22 mit einer Drehzahl n₁ dreht.

Der Verbrennungsmotor 12 hat zu diesem Zeitpunkt eine Drehzahl nᵥ von Null. In Fig. 3 ist gezeigt, dass das von der elektrischen Maschine 40 abgegebene Drehmoment T_{E} größer als Null ist. Die Reibkupplungen 16, 18 sind hingegen so eingestellt, dass sie im Wesentlichen kein jeweiliges Drehmoment T_{K1}, T_{K2} übertragen können. Das von dem Verbrennungsmotor 12 abgegebene Drehmoment Tv ist in dem Diagramm der Fig. 3 negativ dargestellt, um zu verdeutlichen, dass zum Anschleppen des Verbrennungsmotors 12 zunächst ein Losbrechmoment bzw. ein Schleppmoment zu überwinden ist, abhängig davon, ob der Verbrennungsmotor 12 rotiert.

Ausgehend von diesem Zustand erhält das Getriebesteuergerät 44 eine Anforderung den Verbrennungsmotor 12 zu starten, beispielsweise weil ein Energiespeicher für die elektrische Maschine 40 vom Ladezustand her einen Schwellenwert unterschreitet. Dies ist in Fig. 2 bei A1 dargestellt.

Bei dem in Fig. 2 dargestellten Verfahren 50 folgt auf die Startanforderung in einem Schritt A2 eine Ansteuerung des zweiten Teilgetriebes 20, derart, dass die darin eingelegte Gangstufe in Auslegerichtung vorgespannt wird. Da die zugeordnete Schaltkupplung zu diesem Zeitpunkt unter Last steht, die in der Schaltkupplung vorgesehenen Hinterlegungen also ineinandergreifen, wird die Gangstufe jedoch nicht sofort ausgelegt.

In einem folgenden Schritt A3 wird die zweite Reibkupplung 16 auf das Losbrechmoment des Verbrennungsmotors 12 (in der Regel zuzüglich einer gewissen Reserve) eingestellt. Dies erfolgt zum Zeitpunkt t₁. Das Losbrechmoment ist in Fig. 3 bei T_{L} gezeigt.

Parallel hierzu wird in einem Schritt A4 die elektrische Maschine 40 so angesteuert, dass sie das Hochschleppen des Verbrennungsmotors 12 kompensiert. In entsprechender Weise steigt das Moment T_{E} nach dem Zeitpunkt T₁ an.

Durch das Einstellen der zweiten Reibkupplung 16 auf das Losbrechmoment T_{L} wird der Verbrennungsmotor 12 im Zeitraum von t₁ bis t₂ auf die Drehzahl n₂ der Getriebeeingangswelle beschleunigt (A5). Diese Drehzahl ist, wie es in Fig. 3 zu erkennen ist, jedoch kleiner als eine Zünddrehzahl nz des Verbrennungsmotors 12.

Sobald (A6) sich die Drehzahlen angeglichen haben (im Zeitpunkt von t₂ bis t₃) kann die Kompensation durch die elektrische Maschine 40 verringert werden (A7), so dass das Moment T_{E} ab dem Zeitpunkt t₂ wieder etwa auf dem ursprünglichen Niveau ist.

Durch dieses Anschleppen des Verbrennungsmotors 12 auf die Drehzahl nₛ wird der eigentliche Startvorgang vorbereitet, da der Verbrennungsmotor anschließend nur noch um die Drehzahldifferenz n_{z}-nₛ zu beschleunigen ist.

In dem darauffolgenden Schritt A8 wird die zweite Reibkupplung 16 geschlossen, insbesondere überpresst, so dass ein maximales Drehmoment hierüber übertragen werden kann. Daher steigt das Moment T_{K2} im Zeitraum von t₂ bis t₃ steil an.

Ferner wird gleichzeitig oder kurz hiernach die erste Reibkupplung 18 des passiven Teilgetriebes 22 auf ein gewünschtes Antriebsmoment T_{A} eingestellt (A9). Da in dem ersten Teilgetriebe 22 eine Gangstufe vorgewählt ist, wird die erste Reibkupplung 18 hierbei in einem Schlupfzustand betrieben. Das von der elektrischen Maschine 40 abgegebene Drehmoment wird hierbei zumindest teilweise auf den Leistungsübertragungspfad übertragen, der durch die erste Reibkupplung 18 und das erste Teilgetriebe 22 gebildet ist. Parallel zu der Einstellung der ersten Reibkupplung 18 erfolgt in einem Schritt A10 eine Anpassung des Momentes T_{E} der elektrischen Maschine 40. Genauer gesagt wird das Moment T_{E} vorzugsweise etwas verringert, bis die Schaltkupplung der in dem zweiten Teilgetriebe 20 eingelegten Gangstufe im Wesentlichen lastfrei wird und herausspringt, was in Fig. 2 bei A11 gezeigt ist. In Fig. 3 ist dieser Zustand zum Zeitpunkt t₃ erreicht.

Da die elektrische Maschine nun nicht mehr über das zweite Teilgetriebe 20 mit dem Abtrieb (Differenzial 36) verbunden ist, (jedoch ggf. über die erste Kupplung 18 momentenführend mit dem Abtrieb verbunden sein kann), kann die elektrische Maschine nun das abgegebene Drehmoment T_{E} erhöhen, so dass die Drehzahl nᵥ des Verbrennungsmotors 12 ansteigt und die Zünddrehzahl nz überschreitet. Dies ist in Fig. 2 bei A12 dargestellt und in Fig. 3 im Zeitraum zwischen t₃ und t₄. Nach dem Überschreiten der Zünddrehzahl nz wird der Verbrennungsmotor 12 gestartet und kann ab dem Zeitpunkt t₄ ein Moment Tv abgeben. Das Moment Tv des Verbrennungsmotors 12 wird nach dem Zeitpunkt t₄ erhöht, bis es etwa die Größe des Antriebsmomentes T_{A} erreicht hat, das an der ersten Reibkupplung 18 eingestellt ist. Überschneidend hierzu wird das von der elektrischen Maschine 40 abgegebene Drehmoment T_{E} abgesenkt, was in Fig. 2 bei A13 gezeigt ist. Parallel hierzu (A14) wird die Überpressung der zweiten Reibkupplung 16 zurückgefahren (die zweite Reibkupplung 16 wird geöffnet), so dass das Drehmoment T_{K2} bis zum Zeitpunkt t₅ auf null absinkt. Gleiches gilt für das Moment T_{E} der elektrischen Maschine, wohingegen das Moment Tv des Verbrennungsmotors zum Zeitpunkt t₅ das Niveau des Antriebsmomentes T_{A} erreicht hat und folglich Antriebsleistung über den ersten Leistungsübertragungspfad auf den Abtrieb übertragen kann. Die erste Reibkupplung 18 wird dabei im Schlupf betrieben (wie in Fig. 2 bei A15 gezeigt), da die Fahrtgeschwindigkeit des Fahrzeugs 10 nach wie vor der in dem zweiten Teilgetriebe 20 inzwischen ausgelegten Gangstufe entspricht.

Bei dem in den Fig. 2 und 3 gezeigten Verfahren kann folglich während einer rein elektrischen Kriechfahrt der Verbrennungsmotor im Wesentlichen ohne Zugkraftunterbrechung bzw. ohne wesentliche Verringerung der Zugkraft am Abtrieb gestartet werden. Dabei wird von einem rein elektrischen auf einen rein verbrennungsmotorischen Antrieb umgestellt. Dadurch, dass bereits während des Hochbeschleunigens des Verbrennungsmotors von der elektrischen Maschine auch über den ersten Leistungsübertragungspfad 18, 22 Moment übertragen wird, kann das Starten im Wesentlichen ohne Zugkraftunterbrechung erfolgen. Ferner kann ein ruckfreier Übergang von rein elektrischem in rein verbrennungsmotorischen Betrieb erfolgen, indem im Schritt A13 das Moment T_{E} (und/oder das Moment T_{K2}) abgesenkt und gleichzeitig das Moment Tv erhöht wird (die Momente werden gegeneinander "verrampt").

Generell kann das Verfahren der Fig. 2 und 3 auch durchgeführt werden, ohne dass in einem Vorbereitungsschritt von t₁ bis t₂ die Drehzahl nv des Verbrennungsmotors 12 zunächst auf eine Zwischendrehzahl nₛ (n₂) angehoben wird. Ferner kann das Verfahren der Fig. 2 und 3 auch durchgeführt werden, ohne die in dem zweiten Teilgetriebe 20 eingelegte Gangstufe in einem Schritt A2 vorab in Auslegerichtung vorzuspannen. In diesem Fall ist es bevorzugt, wenn der Zeitpunkt, zu dem die Gangstufe lastlos ist und ausgelegt werden kann, aus der Momentenbilanz errechnet wird. Durch das Vorspannen können die hierbei ggf. auftretenden Fehler und Messungenauigkeiten vermieden werden. Ferner wird der gesamte Vorgang durch das Vorspannen A2 beschleunigt, sobald die zugeordnete Schaltkupplung lastfrei oder im Wesentlichen lastfrei wird.

Eine weitere alternative Ausführungsform des erfindungsgemäßen Verfahrens ist in den Fig. 4 und 5 dargestellt.

Dieses Verfahren geht von einem Zustand aus, bei dem der Verbrennungsmotor 12 steht (nv = 0). Ferner steht auch das Fahrzeug, obgleich sowohl in dem ersten Teilgetriebe 22 als auch in dem zweiten Teilgetriebe 20 eine Gangstufe eingelegt ist (n₁ = n₂ = 0).

Von der elektrischen Maschine 40 wird ein Drehmoment T_{E} abgegeben. Sofern das Fahrzeug beispielsweise an einer Steigung steht, kann zudem das Moment T_{K2} zum Zeitpunkt T₀ auf ein Haltemoment T_{H} eingestellt sein, damit das Fahrzeug an dieser Steigung gehalten wird, ohne eine Parkbremse oder dergleichen betätigen zu müssen.

Die erste Reibkupplung 18 ist geöffnet (t_{K1} = 0).

Alternativ hierzu kann zum Zeitpunkt t₀ das von der elektrischen Maschine abgegebene Moment T_{E} auch Null sein und das Moment T_{K2} kann ebenfalls null sein.

Ausgehend von einem dieser zwei Zustände ergeht in einem Schritt B1 (Fig. 4) wiederum eine Startanforderung für den Verbrennungsmotor 12, beispielsweise aus ähnlichen Gründen wie oben genannt.

Zum Starten des Verbrennungsmotors 12 wird in einem weiteren Schritt B2 zunächst wiederum die Gangstufe in dem zweiten Teilgetriebe 20 in Auslegerichtung vorgespannt. Anschließend wird die zweite Reibkupplung 16 im Schritt B3 vollständig geschlossen (überpresst), und zwar in Fig. 5 ab dem Zeitpunkt t₁.

Um das Fahrzeug an einer Steigung beispielsweise nach wie vor zu halten, kann es hierbei erforderlich sein, das Moment T_{E} entsprechend zu regeln.

In dem Zeitabschnitt zwischen t₁ und t₂ wird vorzugsweise nach dem Erhöhen des Momentes T_{K2} das Moment T_{K1} der ersten Reibkupplung 18 auf ein gewünschtes Antriebsmoment T_{A} eingestellt (B4). Parallel hierzu (B5) wird das Moment T_{E} der elektrischen Maschine 40 angepasst (insbesondere abgesenkt), bis zu einem Zeitpunkt t₂ die Schaltkupplung der eingelegten Gangstufe in dem zweiten Teilgetriebe 20 lastfrei ist und herausspringt (B6). Ggf. kann das Moment T_{E} der elektrischen Maschine 40 nach dem Einstellen des Antriebsmomentes T_{A} an der ersten Reibkupplung auch weiter reduziert werden, um eine Lastfreiheit bzw. Entspannung an der eingelegten Gangstufe (bzw. deren Synchronisierung) zu erreichen. In diesem Fall würde gegen den stehenden Verbrennungsmotor 12 gestützt. Ggf. kann auch eine leichte Welligkeit des Momentes T_{E} eingestellt werden, um das Auslegen der Gangstufe zu unterstützen. Der Grund hierfür kann fehlender Schlupf an der ersten Reibkupplung 18 sein, der zu einem erschwerten Auslegen der Gangstufe führen kann. Sobald die Gangstufe herausgesprungen ist, kann über den zweiten Leistungsübertragungspfad keine Antriebsleistung mehr übertragen werden. Da die erste Reibkupplung 18 jedoch auf das Antriebsmoment T_{A} eingestellt ist, wird das Antriebsmoment über die zweite Reibkupplung 16 und die erste Reibkupplung 18 auf den zweiten Leistungsübertragungspfad übertragen, so dass das Fahrzeug beispielsweise an einer Steigung nach wie vor gehalten werden kann.

Nach dem Auslegen der Gangstufe des zweiten Teilgetriebes 20 zum Zeitpunkt t₂ wird in einem Schritt B7 das Moment T_{E} der elektrischen Maschine 40 erhöht, um den Verbrennungsmotor 12 auf die Zünddrehzahl nz zu beschleunigen. Dies ist zum Zeitpunkt t₃ erfolgt, und der Motor kann ab diesem Zeitpunkt gestartet werden und ein Drehmoment abgeben. Hierbei wird ab dem Zeitpunkt t₃ das Moment Tv des Verbrennungsmotors 12 erhöht, wohingegen das Moment T_{E} der elektrischen Maschine im Wesentlichen gleichzeitig verringert wird (B8). Ferner wird auch die zweite Reibkupplung 16 geöffnet (Moment T_{K2} verringert sich). Dies ist in Fig. 4 bei B9 dargestellt.

Etwa ab einem Zeitpunkt t₄ übernimmt der Verbrennungsmotor 12 das Antriebsmoment und das Moment Tv wird auf das Antriebsmoment T_{A} geregelt. Die erste Reibkupplung 18 wird hierbei weiterhin im Schlupf betrieben (B10), um beispielsweise das Fahrzeug an einer Steigung zu halten.

Bei dem oben beschriebenen Verfahren der Fig. 2 bis 5 kann das Starten des Verbrennungsmotors während einer Kriechfahrt oder während eines Stillstandes ohne Zugkraftunterbrechung erfolgen. Demzufolge kann die Kriechfahrt fortgesetzt werden bzw. es kann das Fahrzeug während des Stillstandes sogar an einer Steigung (insbesondere einer Aufwärtssteigung) gehalten werden, ohne dass eine Parkbremse oder eine Fahrzeugbremse oder eine Parksperre zu betätigen sind.

In den nachfolgenden Fig. 6 bis 8 werden weitere Ausführungsformen von Verfahren beschrieben, bei denen das Starten des Verbrennungsmotors aus einer Kriechfahrt heraus erfolgen kann, wobei jedoch ein kurzzeitiger Zugkrafteinbruch erfolgt. Dieses Verfahren kann alternativ zu dem in den Fig. 2 und 3 gezeigten Verfahren immer dann durchgeführt werden, wenn ein Einbruch der Zugkraft nicht von großer Bedeutung ist, das Fahrzeug also beispielsweise nicht bergauf fährt oder sogar leicht einen Hang hinunterfährt oder dergleichen.

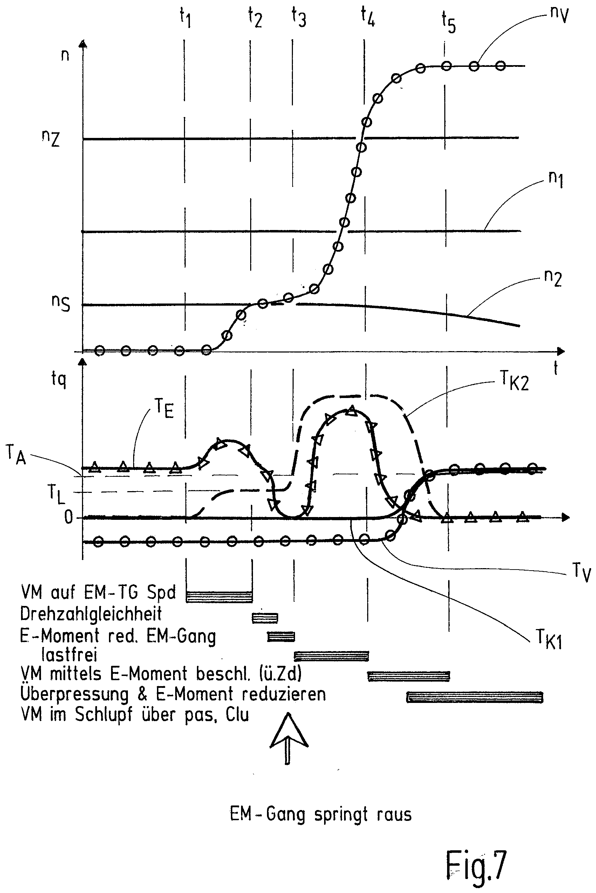

Das Verfahren der Fig. 6 und 7, auf das zunächst eingegangen wird, geht von einem Zustand aus, bei dem der Verbrennungsmotor 12 steht (nv = 0). Ferner fährt das Fahrzeug mit einer Kriechgeschwindigkeit, und in den Teilgetrieben 20, 22 ist jeweils eine Gangstufe eingelegt, so dass n₁ > 0 und n₂ > 0 ist.

Ferner stellt die elektrische Maschine 40 ein Moment T_{E} bereit, so dass Antriebsleistung über das zweite Teilgetriebe 20 für die Kriechfahrt bereitgestellt werden kann.

Die erste und die zweite Reibkupplung 18, 16 sind jeweils geöffnet (T_{K2} = T_{K1}=0).

Ausgehend von diesem Zustand erfolgt wiederum eine Startanforderung für den Verbrennungsmotor 12 (bei C1).

In einem ersten Schritt C2 wird die in dem zweiten Teilgetriebe 20 eingelegte Gangstufe in Auslegerichtung vorgespannt. In einem anschließenden Schritt C3 wird die zweite Reibkupplung 16 auf das Losbrechmoment T_{L} des Verbrennungsmotors 12 (plus einer gewissen Reserve) eingestellt. Hierdurch erhöht sich das Moment T_{K2} im Zeitraum von t₁ bis t₂. Parallel hierzu kompensiert in Schritt C4 die elektrische Maschine 40 das hiermit verbundene Hochschleppen des Verbrennungsmotors 12, wodurch sich das Moment T_{E} in dem Zeitpunkt t₁ bis t₂ kurzzeitig erhöht.

Der Verbrennungsmotor 12 wird hierdurch auf die Drehzahl n₂ der Getriebeeingangswelle des zweiten Teilgetriebes 20 hoch beschleunigt (C5). Zum Zeitpunkt t₂ hat die Drehzahl nv die Drehzahl n₂ erreicht. Dies ist in Fig. 6 bei C6 gezeigt. Anschließend kann die Kompensation des Schrittes C4 beendet werden (C7), wodurch das Moment T_{E} ab dem Zeitpunkt t₂ etwas weiter abfällt.

Anschließend wird im Schritt C8 das Moment T_{E} der elektrischen Maschine 40 reduziert, bis die Schaltkupplung der eingelegten Gangstufe in dem zweiten Teilgetriebe 20 im Wesentlichen lastfrei ist (Schritt C8) und zum Zeitpunkt t₃ herausspringt (C10).

Parallel hierzu (C9) wird die zweite Reibkupplung 16 ab dem Zeitpunkt t₃ geschlossen (überpresst), wodurch das Moment T_{K2} stark ansteigt.

Anschließend wird nach dem Herausspringen der Gangstufe in dem Teilgetriebe 20 das Moment T_{E} der elektrischen Maschine 40 erhöht, bis die Drehzahl nv ausgehend von der Drehzahl n₂ die Zünddrehzahl N_{z} erreicht hat (Schritt C11). Etwa ab dem Zeitpunkt t₄ kann der Verbrennungsmotor 12 gestartet werden, so dass das Moment T_{E} der elektrischen Maschine 40 ab dem Zeitpunkt t₄ wieder abgesenkt werden kann (Schritt C12). Ferner kann ab diesem Zeitpunkt die zweite Reibkupplung 16 wieder geöffnet werden, so dass das Moment T_{K2} abfällt (C13).

Schließlich wird das Moment Tv des Verbrennungsmotors 12 in dem Zeitraum von t₄ bis t₅ erhöht und die erste Reibkupplung 18 wird auf ein Antriebsmoment T_{A} erhöht, auf dessen Wert auch das Moment Tv hochgefahren wird (C14), so dass innerhalb des Zeitraumes von t₄ bis t₅ spätestens jedoch zum Zeitpunkt t₅ wieder Zugkraft aufgebaut werden kann.

Etwa vom Zeitpunkt t₃ bis zu einem Zeitpunkt vor dem oder bis zum Zeitpunkt t₅ wird bei dieser Ausführungsform des erfindungsgemäßen Verfahrens im Wesentlichen keine Zugkraft auf den Abtrieb (Differenzial 36) übertragen.

Dieses Verfahren bietet sich daher nur dann an, wenn das Fahrzeug sich in einem Zustand befindet, in dem eine Zugkraftunterbrechung akzeptiert werden kann, wenn es beispielsweise in der Ebene eine Kriechfahrt vollzieht oder während einer Bergabfahrt. Bei der Ausführungsform der Fig. 7 ist in dem zweiten Teilgetriebe 20 eine höhere Gangstufe eingelegt als in dem ersten Teilgetriebe 22, so dass die Drehzahl n₁ höher ist als die Drehzahl n₂.

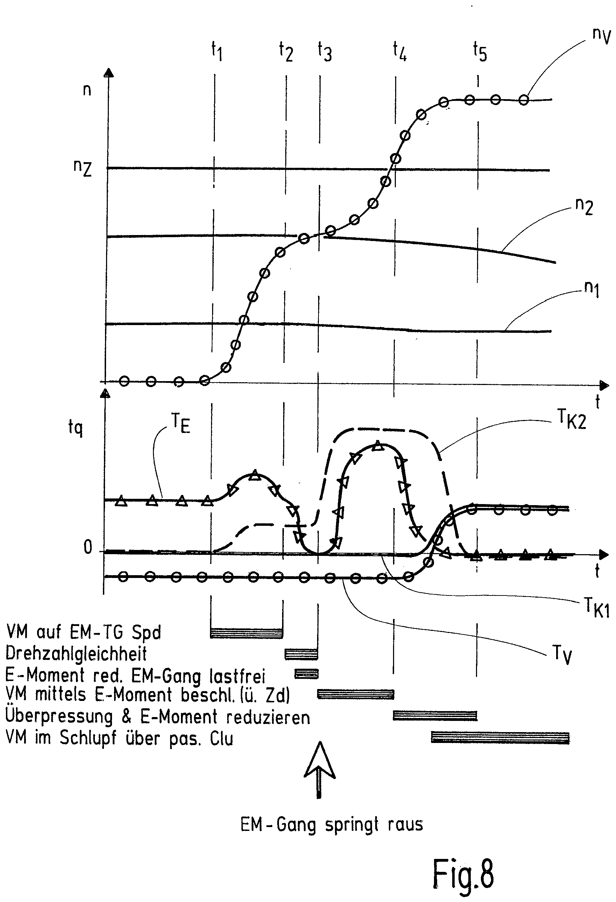

Sofern im umgekehrten Fall die in dem zweiten Teilgetriebe 20 eingelegte Gangstufe niedriger ist als die im ersten Teilgetriebe 22 eingelegte Gangstufe, ergibt sich eine Ausgangssituation, wie sie in Fig. 8 gezeigt ist.

Bei Durchführung im Wesentlichen der gleichen Verfahrensschritte, wie sie unter Bezugnahme auf die Fig. 6 und 7 beschrieben worden sind, ergibt sich dabei im Zeitpunkt von t₁ bis t₂ eine Erhöhung auf die Drehzahl n₂, die in der Darstellung der Fig. 8 bspw. höher ist als die Drehzahl n₁.

Alternativ zu den in den Fig. 7 und 8 gezeigten Varianten ist es auch denkbar, dass zu Beginn des Verfahrens im ersten Teilgetriebe 22 keine Gangstufe eingelegt ist. Falls dies der Fall sein sollte, so kann die Gangstufe beispielsweise im Zeitraum von t₃ bis t₄ eingelegt werden, so dass sich ab diesem Zeitpunkt der gleiche Verfahrensablauf ergibt wie in den Fig. 7 und 8.

Bei den Verfahren, die unter Bezugnahme auf die Fig. 6 bis 8 beschrieben worden sind, kann durch die Vorbereitungsschritte, die in dem zweiten Teilgetriebe 20 eingelegte Gangstufe in Auslegerichtung vorzuspannen und/oder die Drehzahl nv zunächst auf die Drehzahl n₂ der Getriebeeingangswelle des zweiten Teilgetriebes 20 hoch zuschleppen, bevor das Auslegen der Gangstufe in dem zweiten Teilgetriebe 20 erfolgt, eine wesentliche Verkürzung des Gesamtverfahrens erzielt werden. Mit anderen Worten kann die Zeitdauer des Zugkrafteinbruches deutlich verkürzt werden.

Bei der Ausführungsform der Fig. 7, bei der der Verbrennungsmotor 12 zunächst nur auf eine relativ geringe Drehzahl n₂ hoch geschleppt wird, ist es bevorzugt, wenn vor dem Einstellen der ersten Reibkupplung 18 auf das Antriebsmoment T_{A} überprüft wird, ob der Verbrennungsmotor 12 tatsächlich bereits eine Drehzahl größer als die Drehzahl n₁ am Eingang des ersten Teilgetriebes 22 besitzt. Falls dies noch nicht der Fall ist, muss das Erhöhen des Momentes T_{K1} verzögert werden und der Verbrennungsmotor weiter durch die elektrische Maschine 40 beschleunigt werden.

Bei den Ausführungsformen der Fig. 2 bis 5 liegt die Grundidee des Starts des Verbrennungsmotors ohne Zugkraftunterbrechung darin, den Leistungsübertragungspfad unter Einbeziehung des Verbrennungsmotors zu wechseln.

## Patentansprüche

1. Verfahren zum Betreiben eines Hybrid-Antriebsstranges (10) für ein Kraftfahrzeug (11), der einen Verbrennungsmotor (12) und eine an diesen angekoppelte Getriebeanordnung (14) mit zumindest einem Leistungsübertragungspfad aufweist, der eine Reibkupplung (16) und eine Getriebeeinheit (20) aufweist, wobei eine elektrische Maschine (40) an den Leistungsübertragungspfad angekoppelt ist, und zwar in Leistungsflussrichtung hinter der Reibkupplung (16), wobei zum Starten des Verbrennungsmotors (40) während einer Kriechfahrt des Kraftfahrzeugs (11), bei der die Geschwindigkeit des Kraftfahrzeuges (11) so niedrig ist, dass selbst bei der niedrigst möglichen Gangstufe der Getriebeeinheit (20) der Verbrennungsmotor (12) nicht auf eine Zünddrehzahl beschleunigt werden kann, mit eingelegter Gangstufe in der Getriebeeinheit (20) folgende Schritte durchgeführt werden:
- Auslegen der Gangstufe und Schließen der Reibkupplung (16);
- Beschleunigen des Verbrennungsmotors (12) auf die Zünddrehzahl (n_{z}) und Starten des Verbrennungsmotors (12),
wobei in einem Vorbereitungsschritt vor dem Auslegen der Gangstufe die Reibkupplung (16) eingestellt wird, um den Verbrennungsmotor (12) auf eine Drehzahl (nₛ) unterhalb der Zünddrehzahl zu beschleunigen.

2. Verfahren nach Anspruch 1, **dadurch gekennzeichnet, dass** die elektrische Maschine (40) in dem Vorbereitungsschritt dazu angesteuert wird, das Schleppmoment des Verbrennungsmotors (12) zu kompensieren.

3. Verfahren nach Anspruch 1 oder 2, **dadurch gekennzeichnet, dass** die Reibkupplung (16) in dem Vorbereitungsschritt derart eingestellt wird, dass sie ein Moment entsprechend einem Losbrechmoment (T_{L}) des Verbrennungsmotors (12) übertragen kann.

4. Verfahren nach einem der Ansprüche 1-3, **dadurch gekennzeichnet, dass** die Getriebeanordnung (14) ein Doppelkupplungsgetriebe mit einem ersten und einem zweiten Leistungsübertragungspfad aufweist, wobei der erste Leistungsübertragungspfad eine erste Reibkupplung (18) und eine erste Getriebeeinheit (22) aufweist, wobei der zweite Leistungsübertragungspfad eine zweite Reibkupplung (16) und eine zweite Getriebeeinheit (20) aufweist und wobei die elektrische Maschine (40) in Leistungsflussrichtung hinter der zweiten Reibkupplung (16) an den zweiten Leistungsübertragungspfad angekoppelt ist.

5. Verfahren nach Anspruch 4, **dadurch gekennzeichnet, dass** der Schritt des Auslegens der in der zweiten Getriebeeinheit (22) eingelegten Gangstufe und des Schließens der zweiten Reibkupplung (16) die Schritte beinhaltet, zunächst die zweite Reibkupplung zu schließen und anschließend die in der zweiten Getriebeeinheit (22) eingelegte Gangstufe auszulegen.

6. Verfahren nach Anspruch 5, **dadurch gekennzeichnet, dass** die in der zweiten Getriebeeinheit (22) eingelegte Gangstufe vor dem Schließen der zweiten Reibkupplung (16) in Auslegerichtung vorgespannt wird.

7. Verfahren nach Anspruch 5, **dadurch gekennzeichnet, dass** vor dem Auslegen der Gangstufe die erste Reibkupplung (18) auf ein gewünschtes Antriebsmoment (T_{A}) eingestellt wird.

8. Verfahren nach Anspruch 7, **dadurch gekennzeichnet, dass** mit oder nach dem Schließen der zweiten Reibkupplung (16) und dem Einstellen der ersten Reibkupplung (18) auf ein gewünschtes Antriebsmoment (T_{A}) das von der elektrischen Maschine (40) abgegebene Moment (T_{E}) angepasst wird, bis die in der zweiten Getriebeeinheit (22) eingelegte Gangstufe herausspringt.

9. Verfahren nach einem der Ansprüche 4 - 8, **dadurch gekennzeichnet, dass** nach dem Starten des Verbrennungsmotors (12) das von der elektrischen Maschine (40) abgegebene Moment (T_{E}) verringert wird und das von dem Verbrennungsmotor (12) abgegebene Moment (T_{V}) erhöht wird, um die von dem Verbrennungsmotor (12) abgegebene Leistung über den ersten Leistungsübertragungspfad zu übertragen.

10. Verfahren nach einem der Ansprüche 4-9, **dadurch gekennzeichnet, dass** nach dem Starten des Verbrennungsmotors (12) die zweite Reibkupplung (16) geöffnet wird.

11. Verfahren nach einem der Ansprüche 1-4, **dadurch gekennzeichnet, dass** die Gangstufe in dem Vorbereitungsschritt in Auslegerichtung vorgespannt wird und das von der elektrischen Maschine (40) bereitgestellte Moment (T_{E}) nach dem Vorbereitungsschritt angepasst wird, bis die Gangstufe herausspringt.

12. Steuereinrichtung (44) zum Betreiben eines Hybrid-Antriebsstranges (10), die zur Durchführung des Verfahrens nach einem der Ansprüche 1-11 eingerichtet ist.

## Claims

1. Method for operating a hybrid drivetrain (10) for a motor vehicle (11) which has an internal combustion engine (12) and a gearbox arrangement (14) which is coupled thereto and has at least one power transmission path which has a friction clutch (16) and a gearbox unit (20), wherein an electric machine (40) is coupled to the power transmission path, specifically downstream of the friction clutch (16) in the direction of the flow of power, wherein in order to start the internal combustion engine (40) during creeping travel of the motor vehicle (11) during which the speed of the motor vehicle (11) is so low that it cannot be accelerated to an ignition rotational speed even at the lowest possible gear speed of the gearbox unit (20), the following steps are carried out when a gear speed is engaged in the gearbox unit (20);
- disengagement of the gear speed and closing of the friction clutch (16);
- acceleration of the internal combustion engine (12) to the ignition rotational speed (n_{z}) and starting of the internal combustion engine (12),
wherein in a preparatory step for the disengagement of the gearspeed the friction clutch (6) is set to accelerate the internal combustion engine (12) to a rotational speed (nₛ) below the ignition rotational speed.

2. Method according to Claim 1, **characterized in that** in the preparatory step the electric machine (40) is actuated in such a way as to compensate the drag torque of the internal combustion engine (12).

3. Method according to Claim 1 or 2, **characterized in that** in the preparatory step the friction clutch (16) is set in such a way that it can transmit a torque in accordance with a breaking away torque (T_{L}) of the internal combustion engine (12).

4. Method according to one of Claims 1-3, **characterized in that** the gearbox arrangement (14) has a double clutch gearbox with a first and second power transmission path, wherein the first power transmission path has a first friction clutch (18) and a first gearbox unit (22), wherein the second power transmission path has a second friction clutch (16) and a second gearbox unit (20), and wherein the electric machine (40) is coupled to the second power transmission path downstream of the second friction clutch (16) in the direction of the flow of power.

5. Method according to Claim 4, **characterized in that** the step of disengaging the gearspeed which is engaged in the second gearbox unit (22) and of closing the second friction clutch (6) comprises the steps of firstly closing the second friction clutch and subsequently disengaging the gearspeed which is engaged in the second gearbox unit (22).

6. Method according to Claim 5, **characterized in that** the gearspeed which is engaged in the second gearbox unit (22) is prestressed in the disengagement direction before the closing of the second friction clutch (16).

7. Method according to Claim 5, **characterized in that** before the disengagement of the gearspeed the first friction clutch (18) is set to a desired drive torque (T_{A}).

8. Method according to Claim 7, **characterized in that** at or after the closing of the second friction clutch (16) and the setting of the first friction clutch (18) to a desired drive torque (T_{A}), the torque (T_{E}) which is output by the electric machine (40) is adapted until the gearspeed which is engaged in the second gearbox unit (22) jumps out.

9. Method according to one of Claims 4-8, **characterized in that** after the starting of the internal combustion engine (12) the torque (T_{E}) which is output by the electric machine (40) is reduced, and the torque (T_{V}) which is output by the internal combustion engine (12) is increased, in order to transmit the power which is output by the internal combustion engine (12) via the first power transmission path.

10. Method according to one of Claims 4-9, **characterized in that** after the starting of the internal combustion engine (12) the second friction clutch (16) is opened.

11. Method according to one of Claims 1-4, **characterized in that** in the preparatory step the gearspeed is prestressed in the disengagement direction and the torque (T_{E}) which is made available by the electric machine (40) is adapted after the preparatory step until the gearspeed jumps out.

12. Control device (44) for operating a hybrid drivetrain (10) which is configured to carry out the method according to one of Claims 1-11.

## Revendications

1. Procédé destiné au fonctionnement d'une chaîne cinématique hybride (10) pour un véhicule automobile (11), qui présente un moteur à combustion interne (12) et un dispositif de boîte de vitesses (14) couplé à celui-ci avec au moins un chemin de transmission de puissance, qui présente un embrayage à friction (16) et une unité de boîte de vitesses (20), dans lequel une machine électrique (40) est couplée au chemin de transmission de puissance, notamment dans la direction du flux de puissance après l'embrayage à friction (16), dans lequel, pour le démarrage du moteur à combustion interne (40) pendant une circulation lente du véhicule automobile (11), au cours de laquelle la vitesse du véhicule automobile (11) est tellement basse que même avec le rapport le plus bas possible de l'unité de boîte de vitesses (20) le moteur à combustion interne (12) ne peut pas être accéléré à un nombre de tours d'allumage, on exécute les étapes suivantes avec le rapport engagé dans l'unité de boîte de vitesses (20):
- débrayer le rapport et fermer l'embrayage à friction (16);
- accélérer le moteur à combustion interne (12) au nombre de tours d'allumage (n_{z}) et démarrer le moteur à combustion interne (12),
dans lequel, dans une étape de préparation avant le débrayage du rapport, on règle l'embrayage à friction (16) afin d'accélérer le moteur à combustion interne (12) à un nombre de tours (nₛ) inférieur au nombre de tours d'allumage.

2. Procédé selon la revendication 1, **caractérisé en ce que** l'on commande la machine électrique (40), dans l'étape de préparation, de façon à compenser le couple d'inertie du moteur à combustion interne (12).

3. Procédé selon la revendication 1 ou 2, **caractérisé en ce que** l'on règle l'embrayage à friction (16) dans l'étape de préparation de telle manière qu'il puisse transmettre un couple correspondant à un couple initial de démarrage (T_{L}) du moteur à combustion interne (12).

4. Procédé selon l'une quelconque des revendications 1 à 3, **caractérisé en ce que** le dispositif de boîte de vitesses (14) présente une boîte de vitesse à embrayage double avec un premier et un second chemins de transmission de puissance, dans lequel le premier chemin de transmission de puissance présente un premier embrayage à friction (18) et une première unité de boîte de vitesses (22), dans lequel le second chemin de transmission de puissance présente un second embrayage à friction (16) et une seconde unité de boîte de vitesses (20) et dans lequel la machine électrique (40) est couplée au second chemin de transmission de puissance après le second embrayage à friction (16) dans la direction du flux de puissance.

5. Procédé selon la revendication 4, **caractérisé en ce que** l'étape de débrayage du rapport engagé dans la seconde unité de boîte de vitesses (22) et de fermeture du second embrayage à friction (16) comprend les étapes de fermer d'abord le second embrayage à friction et ensuite de débrayer le rapport engagé dans la seconde unité de boîte de vitesses (22).

6. Procédé selon la revendication 5, **caractérisé en ce que** l'on précontraint le rapport engagé dans la seconde unité de boîte de vitesses (22) dans la direction de débrayage avant la fermeture du second embrayage à friction (16).

7. Procédé selon la revendication 5, **caractérisé en ce que** l'on règle le premier embrayage à friction (18) à un couple d'entraînement désiré (T_{A}) avant le débrayage du rapport.

8. Procédé selon la revendication 7, **caractérisé en ce que**, avec ou après la fermeture du second embrayage à friction (16) et le réglage du premier embrayage à friction (18) à un couple d'entraînement désiré (T_{A}), on adapte le couple (T_{E}) fourni par la machine électrique (40), jusqu'à ce que le rapport engagé dans la seconde unité de boîte de vitesses (22) saute brusquement.

9. Procédé selon l'une quelconque des revendications 4 à 8, **caractérisé en ce qu'**après le démarrage du moteur à combustion interne (12), on réduit le couple (T_{E}) fourni par la machine électrique (40) et on augmente le couple (T_{V}) fourni par le moteur à combustion interne (12), afin de transmettre la puissance fournie par le moteur à combustion interne (12) via le premier chemin de transmission de puissance.

10. Procédé selon l'une quelconque des revendications 4 à 9, **caractérisé en ce que** l'on ouvre le second embrayage à friction (16) après le démarrage du moteur à combustion interne (12).

11. Procédé selon l'une quelconque des revendications 1 à 4, **caractérisé en ce que** l'on précontraint le rapport dans la direction de débrayage dans l'étape de préparation et on adapte le couple (T_{E}) fourni par la machine électrique (40) après l'étape de préparation, jusqu'à ce que le rapport saute brusquement.

12. Dispositif de commande (44) destiné à faire fonctionner une chaîne cinématique hybride (10), qui est conçu pour exécuter le procédé selon l'une quelconque des revendications 1 à 11.
